# EUROPEAN PATENT APPLICATION

(11) **EP 0 871 015 A1**
(43) Date of publication of application: **14.10.1998**
(21) Application number: 97927401.6
(22) Date of filing: 19.06.1997
(51) Int. Cl.: G01D 7/00, G08C 19/00, B60K 35/00, B60K 37/00, B60R 16/02

(54) **METER DRIVING DEVICE**

(30) Priority: 24.09.1996 JP 250752/96
(71) Applicant: NIPPON SEIKI CO. LTD., Nagaoka-shi Niigata-ken 940 (JP)
(72) Inventor: TAMURA, Shigeaki, R & D Center of Nippon, Nagaoka-shi, Niigata 940 (JP)
(74) Representative: Votier, Sidney David
(86) International application number: JP9702124
(87) International publication number: WO9813671

(57) **Abstract**

Electronic components other than a meter unit are classified and integrated into plural electronic component units. Input/output ports (attach-and-detach means) permitting the electronic component units to be attached and detached are provided. This meter unit contains a display portion, a control portion, and a power supply portion. The display portion provides a display according to signals from the electronic component units. The control portion controls the electronic component units. The power supply portion supplies electric power to the electronic component units. The electronic component units are controlled and electrically energized via the junction block.

## Description

### TECHNICAL FIELD

The present invention relates to a vehicular meter-driving device and, more particularly, to integration of electronic component units other than the meter.

### BACKGROUND ART

In a vehicle, various electronic components and devices, such as illuminated key entry system, defogger timer, seat belt warning system, light turning-off reminding warning system, key takeout reminding warning system, power door lock, and keyless entry system, are independently installed and distributed. These electronic components are electrically connected with a meter unit mounted in front of the driver's seat. The electronic components are controlled by system means such as a microcomputer incorporated in the meter unit in accordance with a program previously stored in a ROM of the meter unit. The state of the vehicle detected by the electronic components is displayed on the meter unit if necessary (for example, see Japanese Unexamined Patent Publication No. 203553/1995.)

Integration of the distributed independent electronic components is considered as means for achieving cost reduction. The combination of the required electronic components differs according to the vehicular specifications for specific climatic areas or the vehicle grade. Therefore, if electronic components are integrated simply according to the combination, then the number of variations increases. Consequently, large cost reduction cannot be expected.

Japanese Unexamined Patent Publication No. 276571/1994 discloses a multiplexed transmission device for a vehicular electric system. This multiplexed transmission device is separate from electronic components, unlike the prior art device. Since these two kinds of systems can be separately developed and manufactured, it is possible to prevent the electronic components and the multiplexed transmission device from increasing in total number. Even with this structure, however, the number of variations described above cannot be sufficiently decreased.

### DISCLOSURE OF THE INVENTION

The above object is achieved in accordance with the teachings of the invention by a meter-driving device comprising electronic component units and attach-and-detach means permitting attachment and detachment of the electronic component units that are fabricated by classifying electronic parts other than the meter unit into the plural integrated electronic component units. The attach-and-detach means consists of a junction block. A display portion for providing a display according to signals from the electronic component units, a control portion for controlling the electronic component units, and a power supply portion for supplying electric power to the electronic component units are mounted in the meter unit. This device is characterized in that the electronic component units are controlled and electrically energized via the attach-and-detach means. The number of variations can be reduced greatly. This can greatly contribute to a decrease in the cost.

The above object is also achieved in accordance with the teachings of the invention by a meter-driving device comprising electronic component units and an attach-and-detach means permitting the electronic component units to be attached and detached. The electronic component units are fabricated by classifying electronic parts other than the meter unit into the plural integrated electronic component units. The attach-and-detach means consists of a junction block. A display portion for providing a display according to signals from the electronic component units, a control portion for controlling the electronic component units, and a power supply portion for supplying electric power to the electronic component units are mounted in the meter unit. This device is characterized in that the display portion is separable from the meter unit. Only the display portion is installed in the normal meter position of the instrument panel inside a vehicle. Thinning and miniaturization can be realized in this position. This increases the number of degrees of freedom in designing the layout.

Furthermore, the above object is achieved in accordance with the teachings of the invention by designing the meter unit so that the position where the meter unit is installed is occupied by the above-described attach-and-detach means. This can reduce the number of wires.

### BRIEF DESCRIPTION OF THE DRAWINGS

Fig. 1 is a block diagram showing the configuration of an embodiment of the present invention;
Fig. 2 is a block diagram illustrating an example of combination in the above-described embodiment;
Fig. 3 is a block diagram illustrating another example of combination in the above-described embodiment;
Fig. 4 is a block diagram illustrating a further example of combination in the above-described embodiment; and
Fig. 5 is a block diagram of main portions showing a second embodiment of the invention.

### BEST MODE FOR CARRYING OUT THE INVENTION

Embodiments of the present invention are hereinafter described with reference with the accompanying drawings.

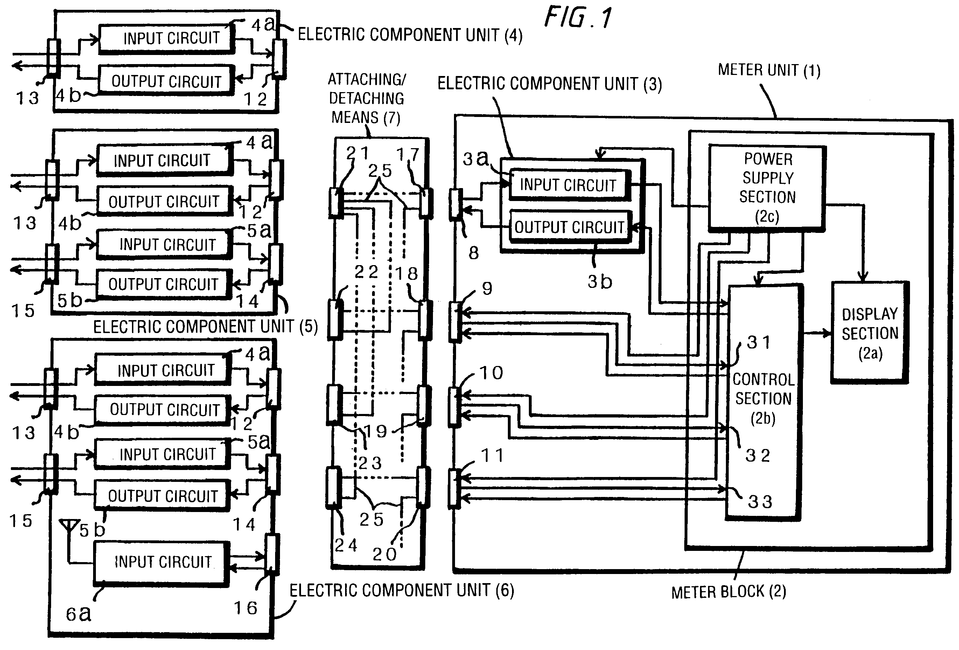

Fig. 1 is a block diagram showing the configuration of a first embodiment. Indicated by 1 is a function-integrated meter unit. A meter block 2 is mounted in the meter unit 1. Plural electronic components are classified and integrated into electronic component units 3-6. An attach-and-detach means 7 consists of a junction block. Input/output ports 8-24 are mounted in the meter unit 1, in the electronic component units 3-6, and in the junction block 7 and have a plug-in connector structure such as a connector.

This junction block 7 is a block in which all fuses, relays, and so on (not shown) are concentrated. Electric circuitry (not shown) connected with the fuses, relays, and so on is fabricated from a bus bar (metal conductor connector) 25 inside the block and acts to distribute electric power. This junction block 7 is mounted in the automobile interior and performs the functions described above. Besides, the junction block 7 serves as a reference part in mounting the meter unit 1 and the electric component units 4-6. The meter unit 1 is affixed to the junction block 7 by aligning the input/output ports 8-11 of the meter unit 1 to the input/output ports 17-20 and connecting them in one touch.

The meter block 2 of the meter unit 1 incorporates a display portion 2a, a control portion 2b consisting of a microcomputer to drive and control the display portion 2a, and a power supply portion 2c for supplying electric power to these portions 2a, 2b. The display portion 2a displays the vehicle speed, the engine speed, and other information. The power supply portion 2c is electrically connected with the vehicle battery (not shown).

In the present embodiment, plural electronic components are classified and integrated into four electronic component units 3-6, for example. For instance, the electronic component unit 3 integrates various electronic components such as seat belt warning system, light turning-off reminding warning system, and key takeout reminding warning system. The unit 3 has an input circuit 3a and an output circuit 3b. The input circuit 3a comprises interface circuits for the ignition switch, a seat belt switch, a light switch, a door switch, and so on. The output circuit 3b receives electric power from the power supply portion 2c, activates a warning means such as a buzzer, and provides a desired display on the display portion 2a of the meter block 2.

The electronic component unit 4 is an integration of electronic components forming an illuminated entry system and a defogger timer, respectively, and has an input circuit 4a and an output circuit 4b. The input circuit 4a is an interface circuit for a door switch, a defogger switch, or the like. The output circuit 4b is a driver circuit for supplying electric power from the power supply portion 2c to a light source or to a heating coil.

The electronic component unit 5 is an integration of the electronic component unit 4 with an electronic component consisting of a power door lock. The component unit 5 has an input circuit 5a and an output circuit 5b. The input circuit 5a is an interface circuit for a door lock switch, a key cylinder switch, or the like. The output circuit 5b is a driver circuit receiving electric power from the power supply portion 2c and driving the door lock actuator.

The electronic component unit 6 is an integration of the electronic component units 4, 5 with an electronic component consisting of a keyless entry system. The component unit 6 has an input circuit 6a that is an interface circuit for an antenna or a receiver circuit that receives a signal emitted by the driver or other person. A driver circuit receives electric power from the power supply portion 2c and opens and closes the door lock. Since this driver circuit acts also as the output circuit 5b, any dedicated driver circuit is not mounted.

Of these four kinds of electronic component units 3-6, the electronic component unit 3 is built into the meter unit 1, since it is used for every kind of vehicle. Its input/output ports 7 are exposed from the meter unit 1. The three remaining electronic component units 4-6 are appropriately selected in the production lines according to the vehicular specifications for specific climatic areas or the vehicle grade, and are mounted to the meter unit 1 via the junction block 7.

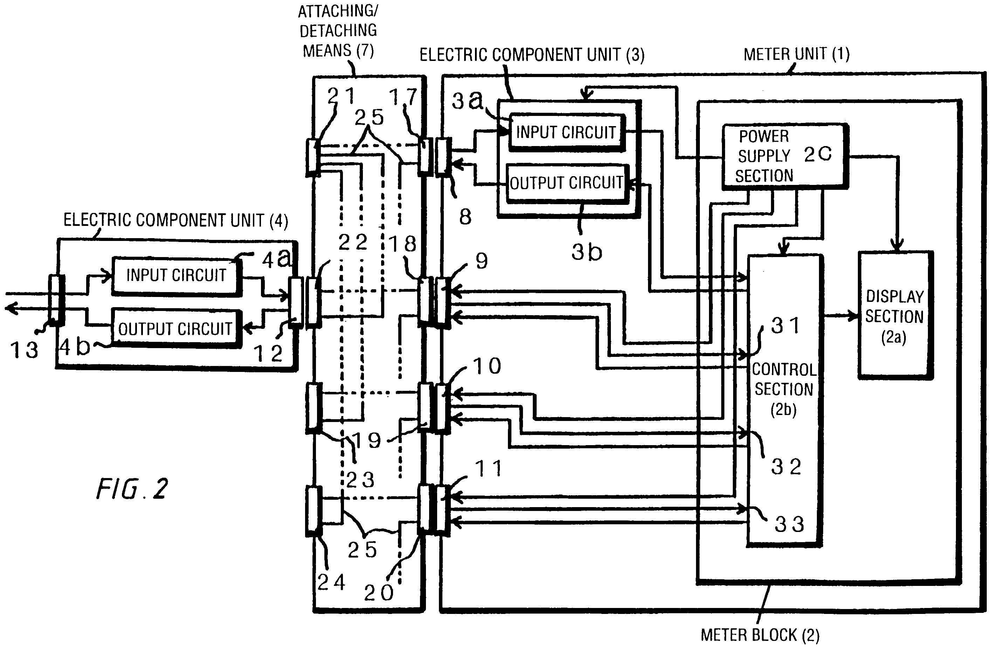

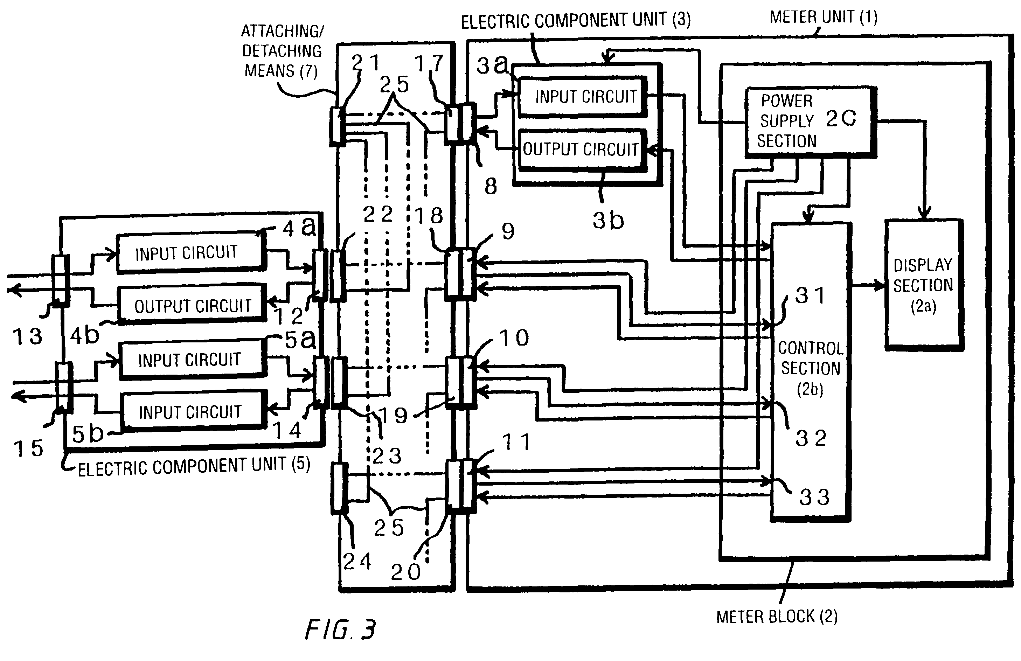

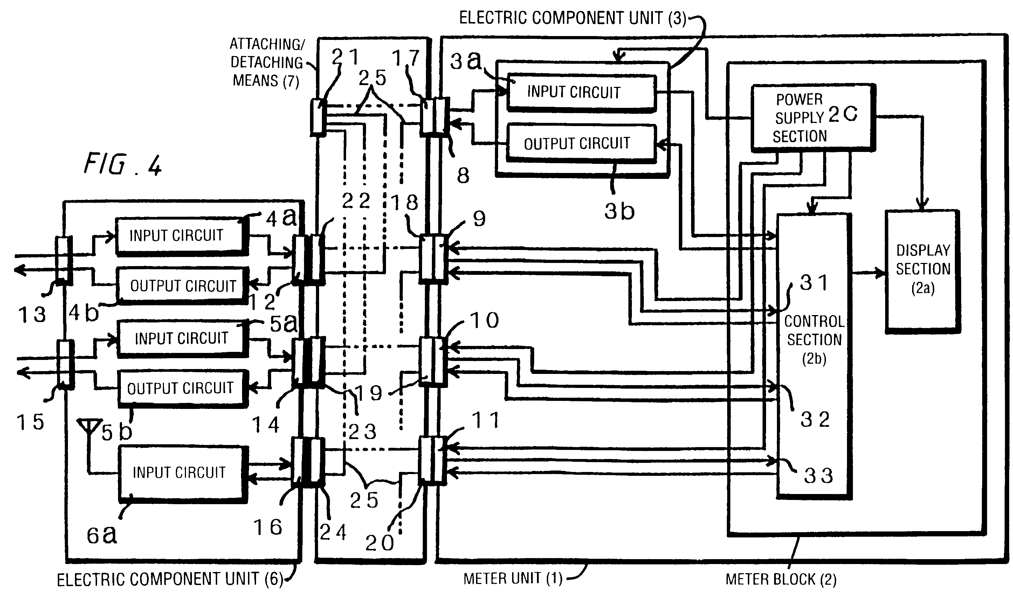

In the case of the electronic component unit 4, its input/output port 12 is connected to the input/output port 22 of the junction block 7 in one touch, whereby the input/output port 12 is connected with the input/output port 9 of the meter unit 1 via the bus bar 25 and via an input/output port 18 (see Fig. 2). In the case of the electronic component unit 5, its input/output ports 12, 14 are connected to input/output ports 22, 23 of the junction block 7 in one touch, so that the input/output ports 12, 14 are connected to input/output ports 9, 10 of the meter unit 1 via the bus bar 25 and via input/output ports 18, 19 (see Fig. 3). In the case of the electronic component unit 6, its input/output ports 12, 14, and 16 are connected to the input/output ports 22, 23, and 24 of the junction block 7 in one touch. The result is that the input/output ports 12, 14, and 16 are connected with the input/output ports 9, 10, and 11 of the meter unit 1 via the bus bar 25 and via the input/output ports 18, 19, and 20 (see Fig. 4).

Thus, the electronic component units 4-6 are controlled and electrically energized by the control portion 2b and the power supply portion 2c of the meter unit 1 via the junction block 7 that is an attach-and-detach means.

Owing to this structure, it is necessary to prepare only four kinds of electronic component units 3-6. The number of variations can be reduced greatly. This is effective in reducing the cost. In particular, 7 kinds of electronic components are used in the present embodiment. There are three kinds of electronic component units 3, two kinds of electronic component units 4, one kind of electronic component unit 5, and one kind of electronic component unit 6. Where at least one kind of electronic component is used according to the vehicular specifications for specific climatic areas or the vehicle grade, there exist 127 combinations of used electronic component units. Even if the electronic components of the electronic component units 3 incorporated in the meter unit 1 are excluded, there still exist 15 variations. In the present embodiment, however, there exist only 3 variations. It will be understood that the number of variations is much fewer.

Even if the same electronic component unit 6 is mounted, the power door lock included in the electronic component unit 5 may be made unnecessary according to the kind of vehicle. Assume that this situation takes place. A separate electronic component unit that consists of the electronic component unit 4 integrated with the electronic component of a keyless entry system is prepared, though this increases the number of variations. Where the kinds of vehicles are fewer, the cost can be more effectively reduced by making use of the electronic component unit 6 including electronic components not used.

The control portion 2b monitors the input/output ports 9-11 of the meter unit 1 and identifies the electronic component unit mounted to the meter unit 1. Specifically, when any one of the electronic component units 4-6 is connected with the meter unit 1 via the junction block 7, the potential at the input terminals 31-33 of the control portion 2b linked to the connected input/output ports 9-11 varies from high to low level. The meter unit 1 monitors their potentials using these input terminals 31-33 as identification means. In this way, the meter unit can identify the kinds of the electronic component units 4-6 by itself.

The identification means are not limited to the above-described input terminals 31-33. Alternatively, one may gain access to the control portion 2a of the meter block 2 from outside the meter unit 1 when or after any appropriate one of the electronic component units 4-6 is selected and mounted to the meter unit 1 in the manufacturing lines. Of course, however, designing the meter unit 1 to act as means capable of identification by itself as in the above-described embodiment immensely contributes to simplification of the manufacturing process line.

It is to be understood that the above-described first embodiment merely gives one example of the invention and that the invention is not limited thereto. For example, electronic components classified and integrated as electronic component units are not limited to those described in the above embodiment. Obviously, the combination may be appropriately selected according to the kind of vehicle.

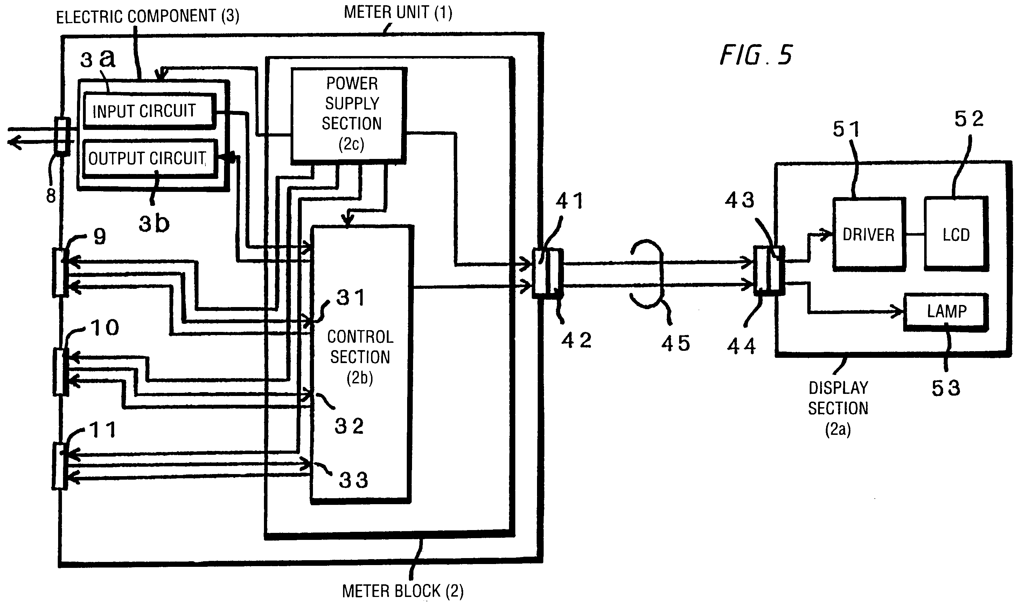

Fig. 5 is a block diagram of main portions showing the structure of a second embodiment. Those parts that are identical or similar to their respective counterparts of the first embodiment described above are designated by the identical reference numerals.

In this second embodiment, the display portion 2a is separated from the meter block 2, and they are connected via connecting means consisting of connectors 41-44 and harness 45. Therefore, the meter unit 1 excluding the display portion 2a is fixed to the junction block 7 in the same way as in the first embodiment, but the display portion 2a can be installed in a desired position remote from the block. Also shown in the figure are a driver 51 consisting of an electronic circuit, an LCD (liquid crystal display) 52 driven by the driver 51, and a lamp 53 for backlighting the LCD 52. Thus, the display portion 2a is formed.

In this structure, only the display portion 2a is installed instead of the whole meter block 2 in the normal meter position of the instrument panel inside the vehicle. Consequently, thinning and miniaturization can be accomplished in this position. Also, layout can be designed with greater degrees of freedom.

In all of the embodiments described above, the meter unit 1 is directly connected with the junction block 7, and the installation position of the meter unit 1 is occupied by the junction block 7. This can reduce the number of wires. Note that this structure is not essential. The meter unit 1 and the junction block 7 may be connected via a normal wiring harness.

The present invention classifies and integrates electronic components other than the meter unit into plural kinds as electronic component units. An attach-and-detach means consisting of a junction block is mounted to permit the electronic component units to be mounted and withdrawn. A display portion for providing a display according to signals from the electronic component units, a control portion for controlling the electronic component units, and a power supply portion for supplying electric power to the electronic component units are mounted in the meter unit. The electronic component units are controlled and electrically energized via the attach-and-detach means. The number of variations can be reduced greatly. This can contribute to a decrease in the cost.

The present invention also provides a meter-driving device comprising electronic component units and attach-and-detach means permitting the electronic component units to be attached and detached. The electronic component units are fabricated by classifying electronic parts other than the meter unit into plural integrated electronic component units. The attach-and-detach means consists of a junction block. A display portion for providing a display according to signals from the electronic component units, a control portion for controlling the electronic component units, and a power supply portion for supplying electric power to the electronic component units are mounted in the meter unit. The display portion is separable from the meter unit. Only the display portion is installed in the normal meter position of the instrument panel inside a vehicle. Thinning and miniaturization can be realized in this position. This increases the number of degrees of freedom in designing the layout.

In another feature of the invention, the position where the meter unit is installed is occupied by the above-described attach-and-detach means. This can reduce the number of wires.

### INDUSTRIAL APPLICABILITY

In this way, the present invention is adapted for a meter-driving device having many kinds of electronic components that are used in a combination that varies according to the vehicular specifications for specific climatic areas or the vehicle grade.

## Claims

1. A meter-driving device comprising:
a meter unit;
electronic components classified and integrated into plural electronic component units;
an attach-and-detach means permitting the electronic component units to be attached and detached, said attach-and-detach means consisting of a junction block;
a display portion for providing a display according to signals from said electronic component units, said display portion being mounted in said meter unit;
a control unit for controlling said electronic component units, said control unit being mounted in said meter unit; and
a power supply portion for supplying electric power to said electronic component units, whereby said electronic component units are controlled and electrically energized via said attach-and-detach means.

2. A meter-driving device comprising:
a meter unit;
electronic components classified and integrated into plural electronic component units;
an attach-and-detach means permitting the electronic component units to be attached and detached, said attach-and-detach means consisting of a junction block;
a display portion for providing a display according to signals from said electronic component units, said display portion being separate from said meter unit within said meter unit;
a control unit for controlling said electronic component units, said control unit being mounted in said meter unit; and
a power supply portion for supplying electric power to said electronic component units, whereby said electronic component units are controlled and electrically energized via said attach-and-detach means.

3. The meter-driving device of claim 1 or 2, wherein said meter unit is mounted in a position where said attach-and-detach means is located.
